Europäisches Patentamt

European Patent Office

Office européen des brevets

(11) Publication number: **0 444 783 A1**

## EUROPEAN PATENT APPLICATION

(21) Application number: 91300768.8

(22) Date of filing: 31.01.91

(51) Int. Cl.5: **F02D 41/14**, F01N 3/18

(30) Priority: **13.02.90 GB 9003235**

(43) Date of publication of application:
**04.09.91 Bulletin 91/36**

(84) Designated Contracting States:
**DE ES FR GB IT SE**

(71) Applicant: **LUCAS INDUSTRIES PUBLIC LIMITED COMPANY**
**Brueton House, New Road**
**Solihull, West Midlands B91 3TX(GB)**

(72) Inventor: **Bradshaw, Benjamin James**
42, Burman Road
Shirley, Solihull, West Midlands B90
2BG(GB)
Inventor: **Scotson, Peter Geoffry**
5, Aqueduct Road
Shirley, Solihull, West Midlands B90 1BT(GB)
Inventor: **Jones, Russell Wilson**
6, Montgomery Drive
Shottery, Stratford, CV37 9EU(GB)
Inventor: **Williams, David**
1, Sorrel Drive
Kingsbury, Warwickshire, B78 2PE(GB)

(74) Representative: **Robinson, John Stuart et al**
**Marks & Clerk Alpha Tower Suffolk Street**
**Queensway**
**Birmingham, B1 1TT(GB)**

(54) Exhaust gas catalyst monitoring.

(57) Operation of an internal combustion engine (1) is controlled by an engine management system (8) in response to a lambda sensor (5) which monitors the oxygen content of exhaust gas flowing into a catalytic converter (4). A universal exhaust gas oxygen (UEGO) sensor (6) monitors the amount of oxygen in exhaust gas leaving the converter (4). The engine management system (8) cycles the air/fuel ratio above and below stoichiometric and the peak-to-peak amplitude of the UEGO sensor output represents the performance of the catalyst in the converter (4) such that larger amplitudes correspond to poorer performance.

FIG.4.

EP 0 444 783 A1

## EXHAUST GAS CATALYST MONITORING.

The present invention relates to a method of and an apparatus for monitoring an exhaust gas catalyst.

Vehicles employing internal combustion engines are increasingly being required to lower the production of air-polluting gases in their exhaust emissions. In order to achieve the requirements which are being imposed by various legislatures on maximum limits for exhaust gas pollutants, it is common nowadays for automotive internal combustion engines to be fitted with exhaust systems including catalytic converters through which the exhaust gases produced by the engine pass. Such converters include a catalyst, usually a metal or metal compound, which converts the undesirable gases emitted by the engine into less harmful gases for venting into the atmosphere. For instance, catalytic converters are available for converting unburnt or partially burnt hydrocarbons and carbon monoxide into water and carbon dioxide and for reducing oxides of nitrogen to nitrogen and oxygen.

The working life of the catalyst in such converters for efficient conversion is limited and can be greatly reduced if the catalyst is "poisoned" by the appearance of certain pollutants in the engine exhaust or by overheating. It is therefore desirable and, in some legislatures, essential for the performance of the catalytic converter to be monitored so as to provide an indication of when the efficiency of the converter has fallen to a level such that it requires replacement.

One proposal for monitoring the efficiency of operation of a catalytic converter is based on measurement of oxygen in the engine exhaust gases by what is known as a lambda sensor. A first lambda sensor is located so as to monitor gases entering the converter and a second lambda sensor is located so as to monitor gases leaving the converter. Each of the sensors provides a two-state output voltage signal which has a first value when oxygen concentration is greater than a threshold and a second value when oxygen concentration is less than a threshold in the gases to which the sensors are exposed. The engine is equipped with a fuelling control system having an input for varying the ratio of air to fuel, this input being connected alternately to the first and second lambda sensors.

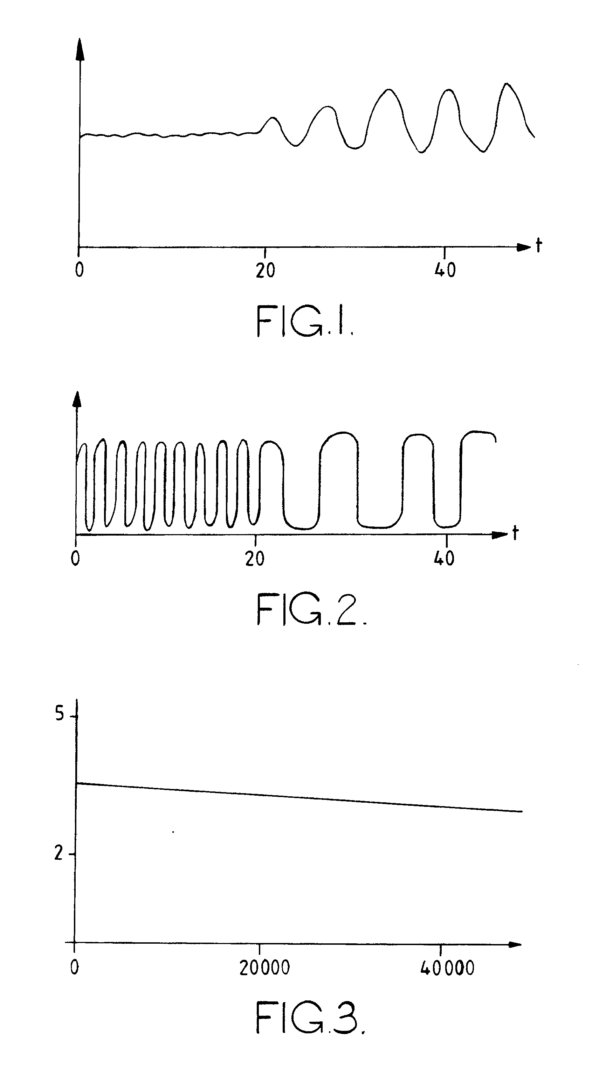

Figures 1 and 2 of the accompanying drawings illustrate graphically the effect on oxygen concentration in the exhaust gas and the output signals of the first and second sensors. Figure 1 is a graph of oxygen concentration, as a ratio of actual concentration to the threshold, against time in seconds whereas Figure 2 is a graph of the sensor output signals in terms of voltage against time in seconds, the time axis of Figure 2 corresponding to the time axis of Figure 1. During an initial phase of operation, the first sensor monitoring gases entering the converter is connected to the fuelling control input of the fuelling control system so as to form a feedback loop which attempts to keep the oxygen concentration about the threshold level. As shown in Figures 1 and 2, this phase of operation extends until a time of 20 seconds, after which the first sensor is disconnected from the input and the second sensor is connected to the input for a second phase of operation during which the air/fuel ratio is controlled on the basis of the concentration of oxygen in the gases leaving the converter.

As can be seen from Figure 1, during the first phase of operation, the oxygen concentration is maintained at the threshold within close limits and the output signal of the first sensor switches at a relatively high rate. During the second phase of operation, the oxygen concentration in the gases leaving the converter varies over a wider range and the output of the second sensor switches at a relatively low rate. It has been found that the ratio of the switching rates between the first and second phases provides a measure of the efficiency of operation of the catalytic converter.

Figure 3 of the accompanying drawings is a graph of the ratio of the switching rate during the first phase to the switching rate during the second phase at constant engine speed measured over a period of use in terms of distance travelled in miles by a typical vehicle. The graph is obtained by periodically recording the ratio when the engine is running at the specified speed for a time sufficient to enable the ratio to be established.

The curve of Figure 3 illustrates a gently sloping downward trend with distance travelled by the vehicle corresponding to the natural degradation of the catalyst in use, and represents normal circumstances where an efficient catalyst is not subjected to increased rates of degradation, for instance caused by poisoning. It is possible to establish a threshold value for the ratio such that, when the ratio falls below the threshold value, an indication is provided that the efficiency of the catalytic converter is no longer acceptable and the converter should be replaced.

Although this system is reasonably effective in monitoring the state of the converter, a disadvantage is that the rate of change of the switching rate ratio with time is very small, as illustrated by the shallow slope of the curve in Figure 3. The value of the ratio therefore remains close to the threshold level and reliable detection of the end of the useful life of the converter is therefore difficult. In particular, relatively small tolerances in manufacture can result either in a still-efficient converter being indicated as unsatisfactory or in an unsatisfactory converter remaining in use. This arrangement therefore lacks accuracy and, if the threshold level is set so as to ensure that unsatisfactory converters do not remain in use, results in an increase in the cost and use of materials caused by premature replacement of satisfactory converters.

According to a first aspect of the invention, there is provided a method of monitoring catalyst performance in an exhaust gas catalytic converter of an internal combustion engine, comprising comparing the level of oxygen in exhaust gas entering the converter with a threshold level, controlling the air/fuel ratio of the engine in response to the comparison, detecting the level of oxygen in exhaust gas leaving the converter, and measuring the peak-to-peak value of the detected level.

According to a second aspect of the invention, there is provided an apparatus for monitoring catalyst performance in an exhaust gas catalytic converter of an internal combustion engine, comprising means for comparing the level of oxygen in exhaust gas entering the converter with a threshold level, means for controlling the air/fuel ratio of the engine in response to the comparing means, means for detecting the level of oxygen in exhaust gas leaving the converter, and means for measuring the peak-to-peak value of the detected oxygen level.

The comparing means may comprise a transducer of the lambda sensor type which normally produces an output signal having two states as described hereinbefore. Although a lambda sensor can be arranged to produce an "analog" signal representing oxygen, it is preferred to use as the detecting means a universal exhaust gas oxygen (UEGO) sensor which provides an output signal which is a continuous function or analog of the oxygen concentration in the exhaust gas, and which can be related to the air/fuel ratio of the engine. For instance, UEGO sensors which give an output voltage substantially proportional to oxygen level are available and may be used as the detecting means.

It has been found that the peak-to-peak value of the detected oxygen level with the engine operating under closed loop lambda control provides a measure of the efficiency of the catalyst in the converter. The peak-to-peak value provides a sensitive indication of catalyst efficiency and, for instance, may be compared with a threshold value so as to give an indication of when the converter working life has been exhausted, which comparison is substantially more sensitive than in the case of the previously described known arrangement.

The peak-to-peak value may be measured at one or more predetermined engine speeds and, for instance, compared with a respective threshold value for the or each engine speed. The peak-to-peak measurements may be averaged so as to make the measurement substantially immune to the effects of occasional or short term erratic or unrepresentative behaviour.

Relatively poor catalyst performance is indicated by relatively large peak-to-peak values.

The invention will be further described, by way of example, with reference to the accompanying drawings, in which:

Figure 1 is a graph of oxygen concentration against time for a known monitoring technique;

Figure 2 is a graph of lambda sensor output signal against time corresponding to the graph of Figure 1;

Figure 3 illustrates performance of the technique illustrated in Figures 1 and 2 over a period of use;

Figure 4 is a block schematic diagram of a vehicle internal combustion engine incorporating a catalyst monitor constituting an embodiment of the present invention;

Figure 5 is a block schematic diagram of the catalyst monitor of Figure 4;

Figure 6 is a graph of lambda sensor output in volts against time in seconds;

Figure 7 is a graph of UEGO sensor output represented as air/fuel ratio (AFR) against time in seconds with the time axis of Figure 7 corresponding to the time axis of Figure 6; and

Figure 8 is a histogram illustrating the performance in terms of UEGO amplitude for a variety of catalysts.

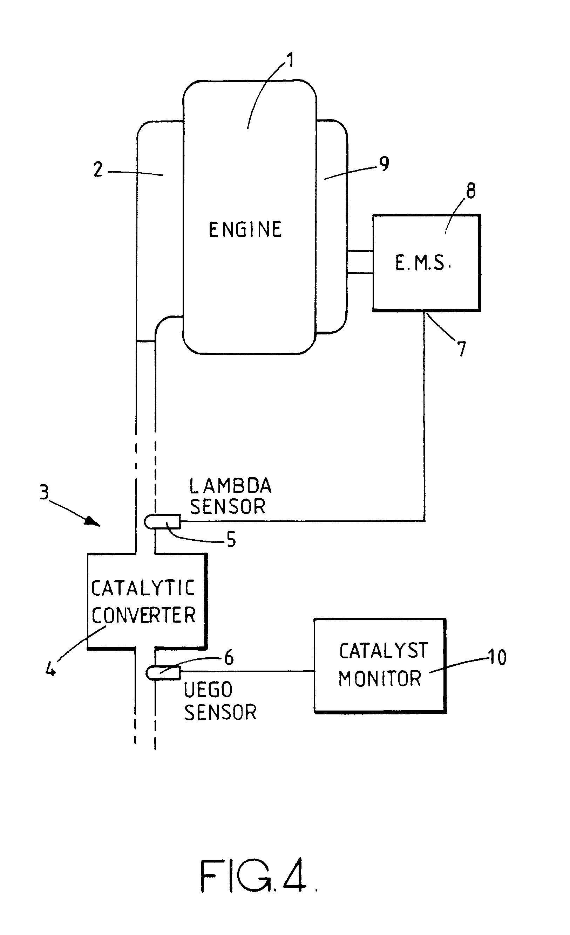

As shown in Figure 4, an automotive internal combustion engine 1 has an exhaust manifold 2 connected to an exhaust system 3 for venting exhaust gases to the atmosphere. The exhaust system 3 (only part of which is shown) includes a catalytic converter 4 of the "three-way type" for converting noxious or undesirable constituents of the exhaust gas into acceptable gases. The converter 4 contains a catalyst with a large surface area exposed to the exhaust gases passing through the converter and is of well known type. A lambda sensor 5 is arranged upstream of the converter 4 so as to monitor the oxygen content of exhaust gases entering the converter. A universal exhaust gas oxygen (UEGO) sensor 6 is arranged downstream of the converter 4 so as to monitor the oxygen content of gases leaving the converter 4. A suitable UEGO sensor is made by N.T.K. and is identified by part No.TL7202.

The output of the lambda sensor 5 is connected to an air/fuel ratio (AFR) input 7 of an engine management system 8 which is shown diagrammatically as being connected to an inlet manifold 9 of the engine 1. For instance, the engine 1 is operated with a stoichiometric mixture of air and fuel by the engine management system 8 under closed loop control. The lambda sensor 5 responds to a threshold level of oxygen or oxygen concentration in the exhaust gas entering the converter 4 and supplies a two state output signal representing oxygen levels or concentrations above and below the threshold level. The output signal of the sensor 5 is used by the engine management system 8 to vary the AFR so as to maintain stoichiometry.

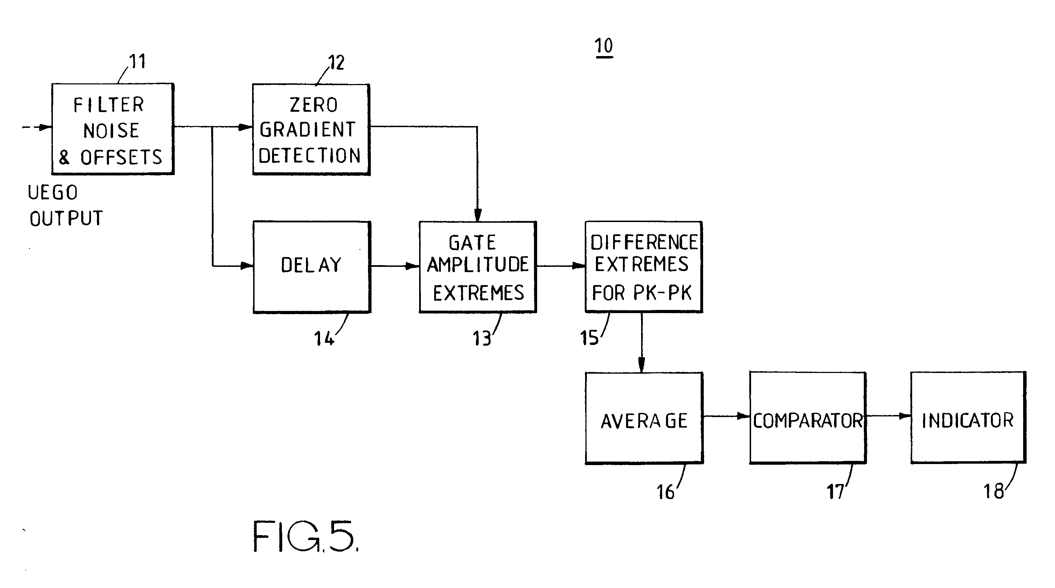

The UEGO sensor 6 is connected to a catalyst monitor 10 whose construction is illustrated in Figure 5.

The output from the UEGO sensor 6 is connected to the input of a circuit 11 for filtering out noise and removing offsets from the sensor output signal. The output of the circuit 11 is supplied to a zero gradient detector 12 which produces an output pulse each time the gradient of the wave form of the signal from the circuit 11 is equal to zero i.e. at the maxima and minima of the wave form. The sampling signal from the detector 12 is supplied to a sampling circuit 13.

The output signal from the circuit 11 is also supplied to the input of a delay circuit 14 which delays the signal by a short time delay equal to the propagation delay of the detector 12, the delayed signal being supplied to a signal input of the sampling circuit 13. Thus, the maxima and minima of the wave form are received by the circuit 13 simultaneously with the corresponding sampling pulses from the detector 12. The circuit 13 thus supplies at its output the maximum and minimum peak values of the wave form. These peak values are supplied to a difference forming circuit 15 which subtracts the peak minimum values from the peak maximum values in order to form the peak-to-peak amplitude of the wave form for each wave form cycle, the peak-to-peak values being supplied to an averaging circuit 16 which supplies an average signal representing a measure of the peak-to-peak amplitude of the UEGO sensor output signal.

The output signal of the monitor circuit 10 may be used in various ways. For instance, it may be monitored by a suitable indicator so as to indicate the performance of the catalyst, for instance during servicing of a vehicle equipped with the engine. The signal may be stored, for instance in non-volatile electronic memory, for subsequent analysis by service personnel. Figure 5 shows the signal being supplied to a comparator (17) which compares it with an acceptable threshold value to provide a visible or audible indication, for instance to a vehicle driver, by means of an indicator (18) when the peak-to-peak value exceeds the threshold value, thus indicating that the efficiency of operation of the catalytic converter is unacceptable.

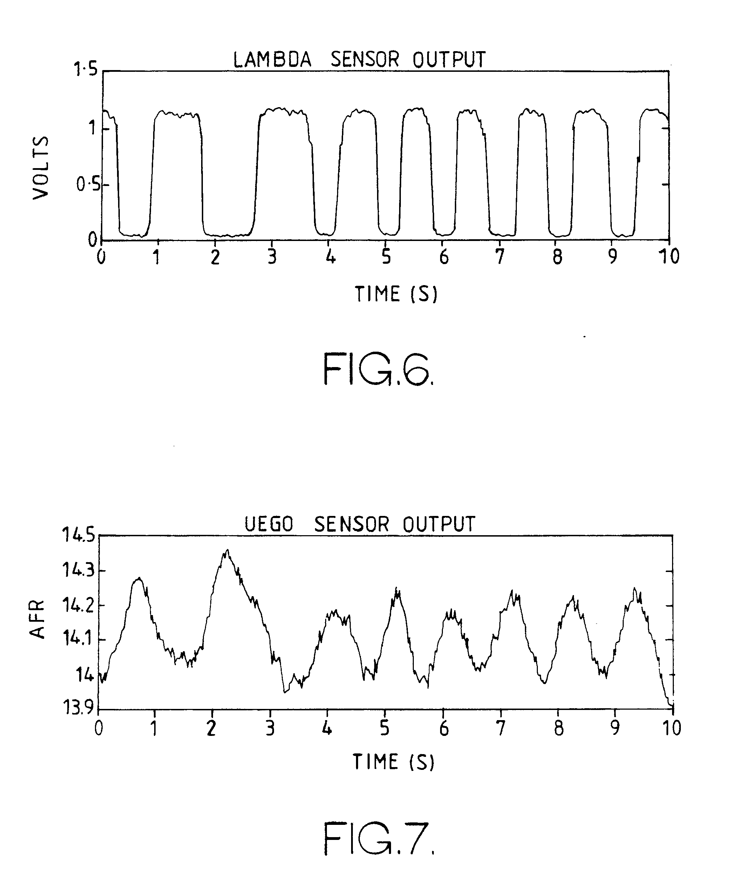

Figure 6 illustrates the output signal of the lambda sensor 5 and Figure 7 illustrates the output signal of the UEGO sensor 6 for comparison therewith. The lambda sensor produces a two-state output signal indicative of whether the oxygen level or concentration in exhaust gases entering the catalytic converter is greater than or less than a threshold level, for instance corresponding to a stoichiometric combustible mixture. The actual level or concentration of oxygen in the engine exhaust gas thus oscillates about the desired level within narrow limits because of the closed loop response of the AFR control system.

As the oxygen level in the exhaust gas from the engine varies with the cycling of the AFR above and below stoichiometry, the catalyst alternately oxidises and reduces the undesirable constituents of the exhaust gas. The effectiveness of the catalyst is therefore dependent in an inverse manner on the oxygen present in the gases leaving the converter, and the level or concentration of oxygen in this gas is converted by the UEGO sensor into a corresponding analog signal which can be proportional to AFR, as illustrated in Figure 7. The peak-to-peak amplitude of the wave form in Figure 7 thus represents the efficiency of the catalyst in the converter such that greater peak-to-peak amplitudes correspond to reduced efficiency of the catalyst.

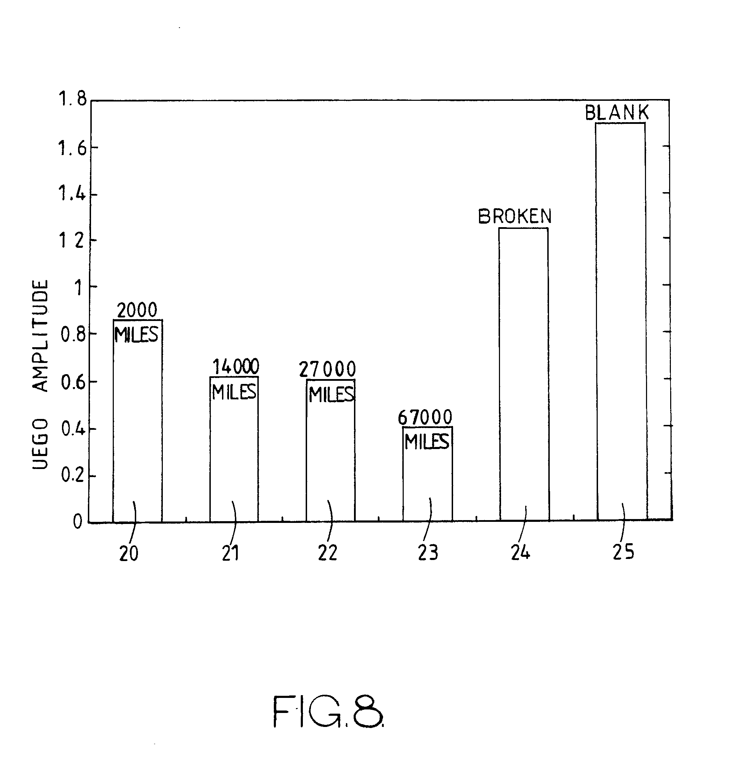

Figure 8 illustrates the results of tests carried out on a number of different catalysts using the apparatus shown in Figures 4 and 5. Columns 20 to 23 illustrate the UEGO sensor output signal peak-to-peak amplitudes for four catalysts in good condition and working correctly after 2,000, 14,000, 27,000, and 67,000 miles, respectively. Column 24 illustrates the peak-to-peak amplitude for the case of a broken or expired catalyst and column 25 illustrates the peak-to-peak amplitude for a converter from which the catalytic material has been omitted. Otherwise, the converters which were used to gather the data illustrated in Figure 8 were of substantially identical construction.

As illustrated in Figure 8, the peak-to-peak amplitudes for a range of catalysts varying from almost new to a catalyst subjected to 67,000 miles of normal operation are substantially smaller than the amplitudes represented by the columns 24 and 25 corresponding to converters whose operation is unacceptable or nil. Efficient converters can therefore readily be discriminated from unacceptable converters with a high degree of sensitivity and reliability. For instance, an acceptability threshold of, for instance, between 1 and 1.2 could be used to provide a reference comparison for acceptability of operation. The sensitivity of this monitoring technique gives very good discrimination between acceptable and unacceptable catalytic converters and provides an accurate indication of poisoning of or damage to the catalyst and life expiry of the catalyst. It is therefore possible to ensure that catalytic converters are not replaced before the end of their working life while preventing the continued use of converters which are no longer operating efficiently. Thus, waste of resources and cost of replacement can be substantially reduced compared with known techniques of monitoring catalysts.

**Claims**

1. A method of monitoring catalyst performance in an exhaust catalytic converter (4) of an internal combustion engine (1), comprising comparing the level of oxygen in exhaust gas entering the converter (4) with a threshold level, controlling the air/fuel ratio of the engine (1) in response to the comparison, detecting the level of oxygen in exhaust gas leaving the converter (4), and measuring the peak-to-peak value of the detected level to provide a measure of catalyst performance.

2. A method as claimed in Claim 1, characterised by repeatedly measuring the peak-to-peak value of the detected level to form a plurality of values and averaging the plurality of values to provide the measure of catalyst performance.

3. A method as claimed in Claim 1 or 2, characterised by comparing the measure of catalyst performance with a threshold value and signalling an unacceptable catalytic converter if the measure exceeds the threshold value.

4. A method as claimed in any one of the preceding claims, characterised by measuring the peak-to-peak value of the detected level at each of a plurality of engine speeds.

5. A method as claimed in Claim 4 when dependent on Claim 2, characterised by repeating the measuring and averaging at each of the plurality of engine speeds.

6. A method as claimed in Claim 4 or 5 when dependent on Claim 3, characterised by comparing the measure for each of the plurality of engine speeds with a respective threshold value.

7. An apparatus for monitoring catalyst performance in an exhaust gas catalytic converter of an internal combustion engine, comprising means for comparing the level of oxygen in exhaust gas entering the converter with a threshold level, means for controlling the air/fuel ratio of the engine in response to the comparing means, and means for detecting the level of oxygen in exhaust gas leaving the converter, characterised by means (12-15) for measuring the peak-to-peak value of the detected oxygen level to provide a measure of catalyst performance.

8. An apparatus as claimed in Claim 7, characterised in that the detecting means comprises a universal exhaust gas oxygen sensor (6).

9. An apparatus as claimed in Claim 7 or 8, characterised by means (17, 18) for comparing the measure of catalyst performance with a threshold value and for signalling an unacceptable catalytic converter if the measure exceeds the threshold value.

10. An apparatus as claimed in any one of Claims 7 to 9, characterised by means (16) for averaging a plurality of measured peak-to-peak values to provide the measure of catalyst performance.

11. An apparatus as claimed in any one of Claims 7 to 10, characterised in that the measuring means comprises a zero gradient detector (12), a gate (13) actuated by the detector (12) to pass maxima and minima from the detecting means (6), and differencing means (15) for forming the difference between the maxima and minima.

FIG.1.

FIG.2.

FIG.3.

FIG.4.

FIG.5.

EP 0 444 783 A1

FIG.6.

FIG.7.

FIG.8.

European
Patent Office

EUROPEAN SEARCH
REPORT

Application Number

EP 91 30 0768

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 622 809   (ABTHOFF et al.)<br>* Abstract; figure 3; column 3, lines 34-41 *<br>– – – | 1-3,7,9,<br>10 | F 02 D 41/14<br>F 01 N 3/18 |
| X | DE-A-3 524 592   (PIERBURG)<br>* Claim 1 *<br>– – – | 1,3,7,9 | |
| A | PATENT ABSTRACTS OF JAPAN, vol. 13, no. 244 (M-834),<br>7th June 1989;<br>& JP-A-1 53 038 (MITSUBISHI) 10-03-1989<br>– – – | 1,8,11 | |
| A | PATENT ABSTRACTS OF JAPAN, vol. 12, no. 336 (M-739),<br>9th September 1988;<br>& JP-A-63 97 844 (TOYOTA) 28-04-1988<br>– – – | 4-6 | |
| A | PATENT ABSTRACTS OF JAPAN, vol. 12, no. 445 (M-767),<br>22nd November 1988;<br>& JP-A-63 176 641 (TOYOTA) 20-07-1988<br>– – – – – | 4-6 | |

TECHNICAL FIELDS
SEARCHED (Int. Cl.5)

F 02 D

The present search report has been drawn up for all claims

| Place of search | Date of completion of search | Examiner |
|---|---|---|
| The Hague | 31 May 91 | GAGLIARDI P. |

CATEGORY OF CITED DOCUMENTS

X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons

&: member of the same patent family, corresponding
document